(19) Europäisches Patentamt
European Patent Office
Office européen des brevets

(11) **EP 4 691 706 A1**

(12) **EUROPEAN PATENT APPLICATION**
published in accordance with Art. 153(4) EPC

(43) Date of publication:
**11.02.2026 Bulletin 2026/07**

(21) Application number: **23932041.9**

(22) Date of filing: **06.04.2023**

(51) International Patent Classification (IPC):
**B25J 13/08** (2006.01)    **B25J 19/04** (2006.01)
**G06T 7/70** (2017.01)

(52) Cooperative Patent Classification (CPC):
**B25J 19/04; G06T 7/70; B25J 13/08**

(86) International application number:
**PCT/JP2023/014260**

(87) International publication number:
**WO 2024/209630 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Fuji Corporation
Chiryu-shi, Aichi 472-8686 (JP)**

(72) Inventor: **OISHI Nobuo
Chiryu-shi, Aichi 472-8686 (JP)**

(74) Representative: **Grünecker Patent- und
Rechtsanwälte
PartG mbB
Leopoldstraße 4
80802 München (DE)**

(54) **IMAGE PROCESSING METHOD AND ROBOT SYSTEM**

(57)    In an image processing method, an image obtained by capturing an image of a workpiece placed on a loading surface from a predetermined height with a two-dimensional camera is processed to recognize a position of the workpiece as a coordinate value in units of pixels, and the coordinate value in units of pixels is converted into a coordinate value in units of lengths using a resolution serving as an amount of change in length per unit pixel of the image. In the method, a first relationship that is a relationship between a unit resolution serving as an amount of change in resolution per unit height and a working distance serving as a distance between a target object and a lens of the two-dimensional camera is acquired. Next, a resolution of the image of the two-dimensional camera with respect to the loading surface of the workpiece at an installation height of the two-dimensional camera is measured when the two-dimensional camera is installed to estimate a working distance for measurement, and the unit resolution is estimated based on the estimated working distance and the first relationship. A height of the workpiece is acquired, and the resolution of the image is corrected based on the acquired height of the workpiece and the estimated unit resolution.

[Fig. 11]

**Description**

Technical Field

The present description discloses an image processing method and a robot system.

Background Art

Conventionally, a robot that performs work on a workpiece, a two-dimensional camera that captures an image of the workpiece from a predetermined height, an image processing section that processes the captured image and recognizes a position of the workpiece as coordinate values of a two-dimensional coordinate system (vision coordinate system) with a reference point of the image as an origin, and a robot control system that converts the recognized coordinate values in units of pixels into coordinate values in units of lengths according to a height dimension of the workpiece has been proposed (for example, refer to Patent Literature 1). In this robot control system, the distance between the height position of a workpiece loading surface and the lens of the camera is first determined in advance as a reference working distance. The resolution at the reference working distance is calculated as a reference resolution R0. Next, a resolution R1 at a position higher than the reference height position by a predetermined height Tcp is calculated, and the amount of change in resolution per unit height dimension ((Ro - R1)/Tcp) is calculated as a unit resolution Runi. A corrected resolution Rh is obtained by subtracting the integrated value of the unit resolution Runi and the height dimension H of the workpiece from the reference resolution R0 (R0 - Runi × H). The coordinate values in units of pixels in the vision coordinate system are converted into coordinate values in units of lengths by the corrected resolution Rh.

Citation List

Patent Literature

Patent Literature 1:WO 2020/121399

Summary of the Invention

Technical Problem

When the height dimension of the workpiece is within the range of the depth of field of the lens of the camera, the resolution at the upper end surface of the workpiece can be obtained by applying the workpiece height dimension to the amount of change in resolution per unit height dimension (unit resolution) on the premise that the resolution changes in a linear function manner with respect to the working distance. However, for example, in a robot system that handles workpieces having various workpiece heights, in a case where there is a variation in the workpiece height or the installation height of the camera accompanied by focus adjustment of the camera, such as a case where the installation environment of the camera changes after the resolution is adjusted, the unit resolution is not constant before and after the variation, and the resolution cannot be accurately obtained by the conventional method. Therefore, the recognition accuracy of the workpiece position is reduced.

A main object of the present disclosure is to accurately recognize a position in a horizontal direction of an upper end surface of a workpiece with a two-dimensional camera even in a case where a workpiece height, an installation height of the camera, or the like varies.

Solution to Problem

The present disclosure adopts the following means to achieve the main object described above.

An image processing method of the present disclosure is

an image processing method for processing an image obtained by capturing an image of a workpiece placed on a loading surface from a predetermined height with a two-dimensional camera to recognize a position of the workpiece as a coordinate value in units of pixels, and converting the coordinate value in units of pixels into a coordinate value in units of lengths using a resolution serving as an amount of change in length per unit pixel of the image, the method including

a first step of acquiring a first relationship that is a relationship between a unit resolution serving as an amount of change in resolution per unit height and a working distance serving as a distance between a target object and a lens of the two-dimensional camera,

a second step of measuring a resolution of the image of the two-dimensional camera with respect to the loading surface of the workpiece at an installation height of the two-dimensional camera when the two-dimensional camera is installed to estimate a working distance for measurement, and estimating the unit resolution based on the estimated working distance and the first relationship, and

a third step of acquiring a height of the workpiece and correcting the resolution of the image based on the acquired height of the workpiece and the estimated unit resolution.

As a result of intensive studies, the inventors of the present application found that there is a certain relationship between the unit resolution and the working distance (a relationship in which the unit resolution changes in a linear function manner with respect to the reciprocal of the working distance) in a case where the workpiece height, the installation height of the camera, or the like varies and the working distance is relatively significantly changed. Therefore, by acquiring the relationship between the unit resolution and the working distance in advance, it is possible to measure the resolution at the height at which the two-dimensional camera is installed to estimate the working distance for measurement, and estimate the unit resolution from the estimated working distance to accurately correct the resolution of the image according to the height of the workpiece. As a result, even in a case where the workpiece height, the installation height of the camera, or the like varies, the position in the horizontal direction of the upper end surface of the workpiece can be accurately recognized using the two-dimensional camera.

A robot system according to the present disclosure is

a robot system including a working robot configured to perform work on a workpiece placed on a loading surface and a two-dimensional camera configured to capture an image of the workpiece placed on the loading surface from a predetermined height, the robot system including

an image processing section configured to process the image captured with the two-dimensional camera to recognize a position of the workpiece as a coordinate value in units of pixels, and convert the coordinate value in units of pixels into a coordinate value in units of lengths using a resolution serving as an amount of change in length per unit pixel of the image,

a storage section configured to store a first relationship that is a relationship between a unit resolution serving as an amount of change in resolution per unit height and a working distance serving as a distance between a target object and a lens of the two-dimensional camera,

an estimation section configured to measure a resolution of the image of the two-dimensional camera with respect to the loading surface of the workpiece at a height at which the two-dimensional camera is installed to estimate a working distance for measurement, and estimate a unit resolution based on the estimated working distance and the first relationship, and

a correction section configured to acquire a height of the workpiece and correct the resolution of the image based on the acquired height of the workpiece and the estimated unit resolution.

According to the robot system of the present disclosure, by storing the relationship between the unit resolution and the working distance in the storage section in advance, it is possible to measure the resolution at the height at which the two-dimensional camera is installed to estimate the working distance for measurement, and estimate the unit resolution from the estimated working distance to accurately correct the resolution of the image according to the height of the workpiece. As a result, even in a case where the workpiece height, the installation height of the camera, or the like varies, the position in the horizontal direction of the upper end surface of the workpiece can be accurately recognized using the two-dimensional camera.

Brief Description of Drawings

Fig. 1 is a schematic configuration diagram of a robot system.
Fig. 2A is a diagram illustrating a system in which a two-dimensional camera is installed on a robot arm.
Fig. 2B is a diagram illustrating a system in which the two-dimensional camera is fixed above a work area.
Fig. 3 is a block diagram illustrating an electric connection relationship of the robot system.
Fig. 4 is a diagram illustrating a state of position recognition of a workpiece with respect to an image.
Fig. 5A is a diagram illustrating a state of a variation in a working distance with a change in a workpiece height.
Fig. 5B is a diagram illustrating a state of a variation in a working distance with a change in an installation height of the two-dimensional camera.
Fig. 6A is a diagram illustrating the slope of the amount of change in resolution with respect to the amount of change in the working distance in a case where the workpiece height is changed.

Fig. 6B is a diagram illustrating the slope of the amount of change in resolution with respect to the amount of change in the working distance in a case where the installation height of the two-dimensional camera is changed with focus adjustment.

Fig. 6C is a diagram illustrating the slope of the amount of change in resolution with respect to the amount of change in the working distance in a case where the workpiece height is changed after the installation height of the two-dimensional camera is changed with the focus adjustment.

Fig. 7 is a flowchart illustrating an example of a workpiece height correction procedure.

Fig. 8 is a flowchart illustrating an example of advance preparation for camera adjustment.

Fig. 9 is a diagram illustrating an example of a jig plate for resolution measurement.

Fig. 10 is a diagram illustrating multiple known working distances for performing resolution measurement.

Fig. 11 is a diagram illustrating unit resolution coefficient ResUnitCoef.

Fig. 12 is a diagram illustrating a relationship between 1/WD and unit resolution.

Fig. 13 is a diagram illustrating a unit resolution ResUnit_W for a wide WD range.

Fig. 14 is a flowchart illustrating an example of advance preparation for camera installation.

Fig. 15 is a flowchart illustrating an example of workpiece height correction.

Description of Embodiments

Next, an embodiment of the present disclosure will be described with reference to the drawings.

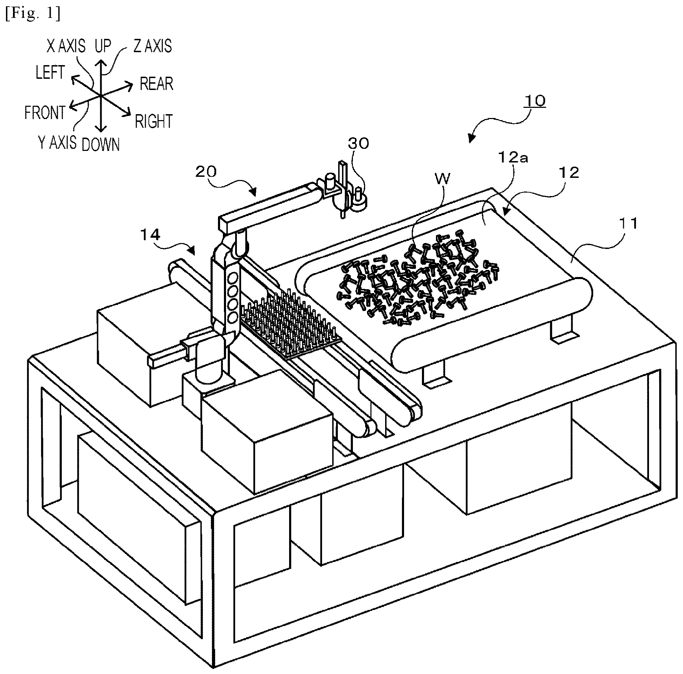

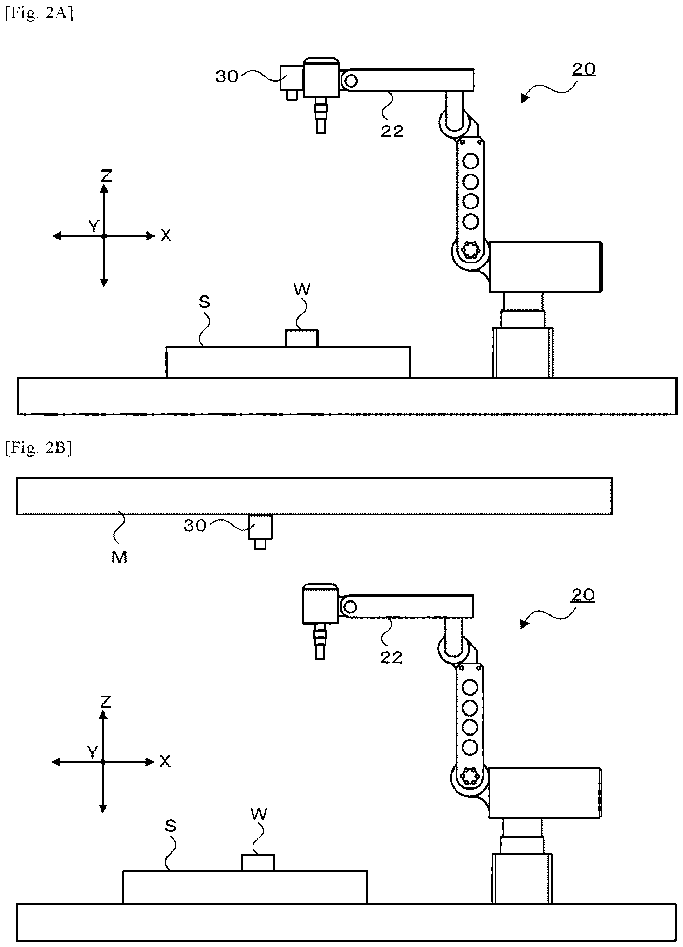

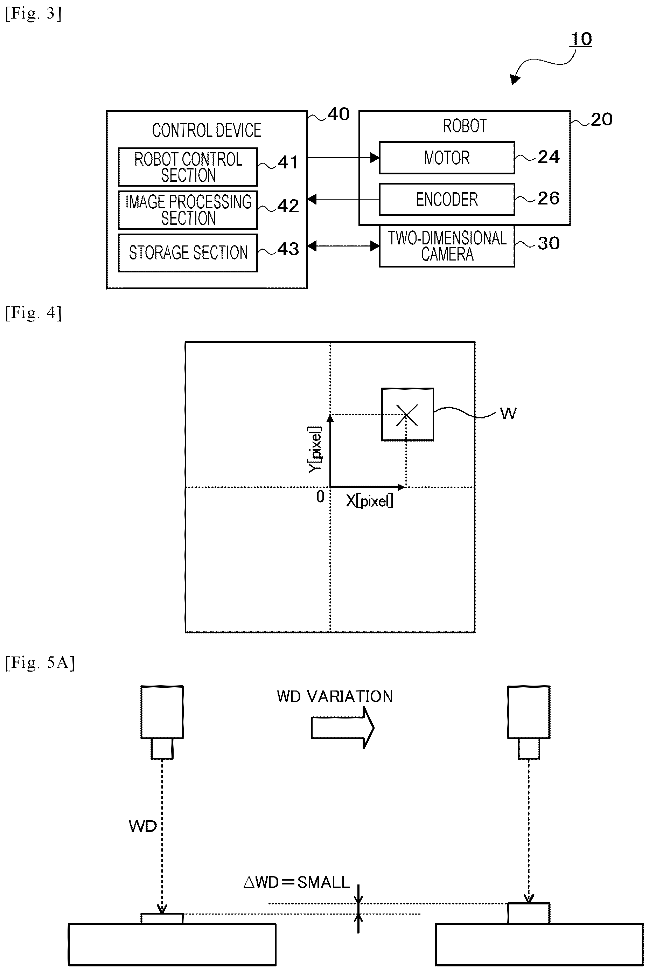

Fig. 1 is a schematic configuration diagram of robot system 10. Fig. 2A is a diagram illustrating a system in which two-dimensional camera 30 is installed on robot arm 22. Fig. 2B is a diagram illustrating a system in which two-dimensional camera 30 is fixed above a work area. Fig. 3 is a block diagram illustrating an electric connection relationship of robot system 10.

As illustrated in Fig. 1, robot system 10 includes workpiece supply device 12, robot 20, two-dimensional camera 30, and control device 40 (refer to Fig. 3). In robot system 10, two-dimensional camera 30 captures an image of workpiece W (target object) supplied by workpiece supply device 12 to recognize the position of workpiece W, and robot 20 performs work on workpiece W at the recognized position. Examples of the work performed by robot 20 include a transfer work of picking up workpiece W and transferring workpiece W to another place, and an assembly work of picking up workpiece W and assembling workpiece W to an assembly target object.

In the present embodiment, as illustrated in Figs. 1 and 2, robot 20 includes five-axis vertical articulated arm (hereinafter, referred to as an arm) 22. Arm 22 includes six links and five joints that rotatably or swingably connect each link. Each joint is provided with motor (servo motor) 24 for driving the corresponding joint and encoder (rotary encoder) 26 for detecting the rotational position of corresponding motor 24.

A work tool as an end effector is detachably attached to a distal end link of arm 22. Examples of the work tool include an electromagnetic chuck, a mechanical chuck, and a suction nozzle.

Two-dimensional camera 30 is installed to face vertically downward, and captures an image of workpiece W installed on workpiece loading surface S in the work area. Two-dimensional camera 30 can be installed on arm 22 (refer to Fig. 2A), or can be installed on fixing member M (for example, a ceiling portion of a protective fence of robot 20) fixed above the work area of robot 20 (refer to Fig. 2B). The distance (working distance WD) between the lens of two-dimensional camera 30 and workpiece W serving as the subject changes depending on the installation height of two-dimensional camera 30. Therefore, as two-dimensional camera 30, a camera capable of adjusting focus for performing focusing according to working distance WD is used.

Robot control device 40 is configured as a microprocessor including CPU as a main element. Robot control device 40 includes, as functional blocks, robot control section 41 that controls each motor 24 of robot 20, image processing section 42 that processes an image captured with two-dimensional camera 30, storage section 43 that stores various data, and the like. Position signals from each encoder 26, image signals from two-dimensional camera 30, and the like are input to robot control device 40. In addition, robot control device 40 outputs a control signal to each motor 24, a control signal to two-dimensional camera 30, and the like.

Robot control section 41 causes each motor 24 and the work tool to move the work tool attached to the distal end link of arm 22 toward workpiece W and perform work on workpiece W using the work tool. Specifically, robot control device 40 captures an image of workpiece W with two-dimensional camera 30 and acquires the position coordinates (XW, YW, ZW) of workpiece W in the robot coordinate system from image processing section 42. Next, robot control section 41 sets a target position (X, Y, Z) and a target posture (RB, RC) of the work tool based on the acquired position coordinates (XW, YW, ZW) of workpiece W, and performs coordinate conversion of the set target position (X, Y, Z) and target posture (RB, RC) into a target angle of each joint of arm 22 using known HD parameters or the like. Robot control section 41 causes corresponding motor 24 such that the angle of each joint detected by each encoder 26 matches the corresponding target angle, and causes the work tool such that work is performed on workpiece W.

Image processing section 42 processes the image of workpiece W captured with two-dimensional camera 30 to recognize the position coordinates (XW, YW, ZW) of the robot coordinate system workpiece W. Specifically, image processing section 42 first processes the image of workpiece W to recognize position coordinates (X, Y) [pixel] of workpiece W in units of pixels in an orthogonal coordinate system (image coordinate system) in which a reference point (for example, the center of the image) of the image is set as an origin 0 (refer to Fig. 4). Next, image processing section 42 converts the position coordinates (X, Y) [pixel] of workpiece W in units of pixels into the position coordinates (X, Y) [μm] of workpiece W in units of lengths (for example, units of μm) by following Equation (1). In Equation (1), "Res_h" represents the size of one pixel on the upper end surface of workpiece W (the surface located at a position higher than loading surface S on which workpiece W is placed by workpiece height h), that is, the resolution. Image processing section 42 converts the position coordinates (X, Y) [μm] of workpiece W in units of lengths of the image coordinate system and workpiece height h into coordinate values (XW, YW, ZW) of the three-dimensional robot coordinate system.

$$(X, Y)[pixel] = (X, Y)[\mu m] \times Res\_h \ ... \ (1)$$

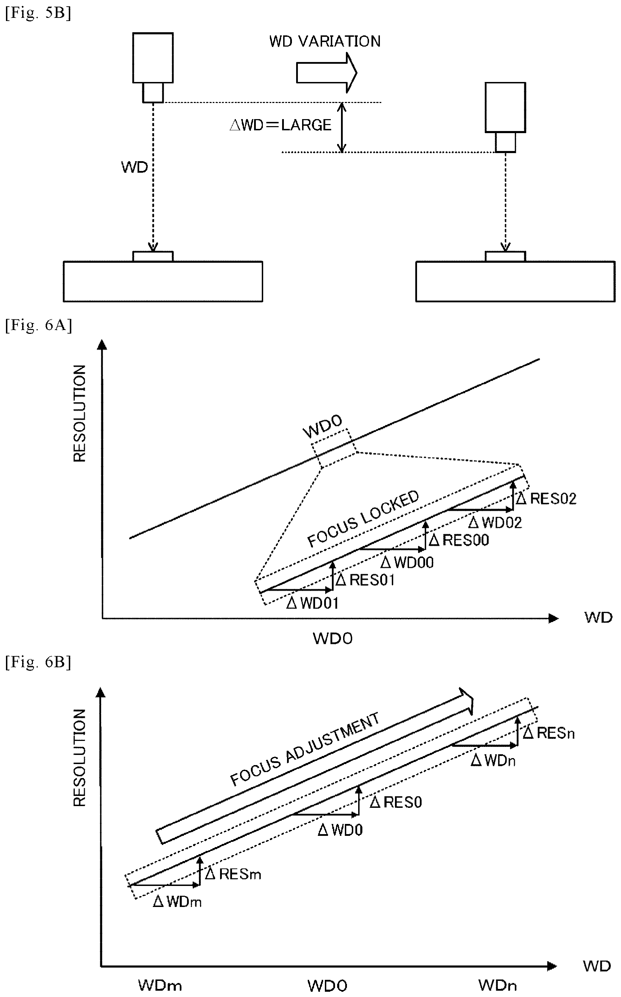

Here, as illustrated in Fig. 6A, when workpiece height h is within the depth of field of two-dimensional camera 30, resolution RES_h is a linear function with respect to working distance WD. The slope of the linear function represents the amount of change in resolution per unit height (for example, 1 mm) (hereinafter referred to as unit resolution), and is constant. Therefore, the distance between the lens of two-dimensional camera 30 and loading surface S of workpiece W at the installation height of two-dimensional camera 30 is set as reference working distance WD0, and each of resolutions RES0 and RES1 is measured at two known working distances WD0 and WD1 including reference working distance WO, so that unit resolution ResUnit_0 can be calculated by following Equation (2). Resolution Res_h can be calculated by following Equation (3).

$$ResUnit\_0 = (RES0 - RES1)/(WD0 - WD1) \ ... \ (2)$$

$$Res\_h = RES0 - ResUnit\_0 \times h \ ... \ (3)$$

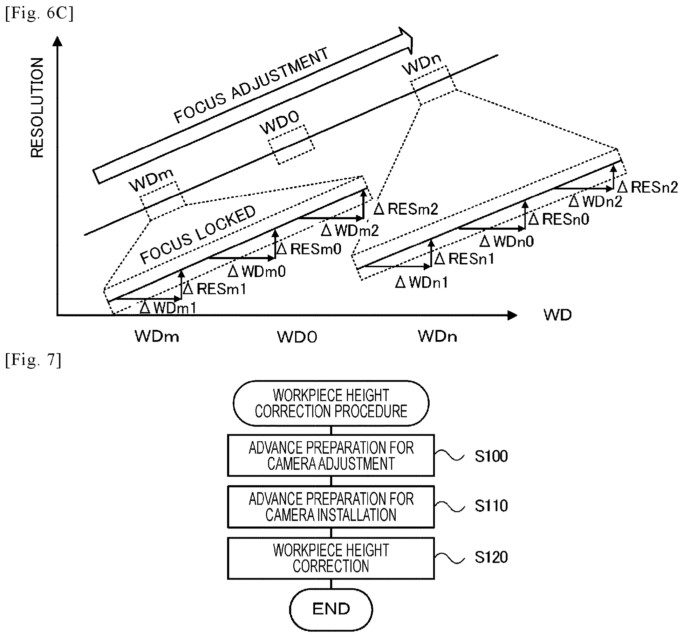

In addition, as illustrated in Fig. 6B, also in a case where the installation height of two-dimensional camera 30 is changed with focus adjustment, the variation amount (unit resolution) of the resolution with respect to the variation amount of the installation height is constant. However, as illustrated in Fig. 6C, in a case where workpiece height h is changed after the installation height of two-dimensional camera 30 is changed with the focus adjustment, the variation amount (unit resolution) of the resolution with respect to the variation amount of the workpiece height before and after the change of the installation height is not constant in a strict sense as a result of the experiment. Therefore, in the present embodiment, even in a case where the workpiece height is changed after the installation height of two-dimensional camera 30 is changed with the focus adjustment, in order to correctly perform the height correction of workpiece W, unit resolution ResUnit_n at any working distance WDn is obtained, and the workpiece height correction is performed on resolution RESn on loading surface S of workpiece W determined by working distance WDn based on obtained unit resolution ResUnit_n and workpiece height h.

Hereinafter, a procedure for the workpiece height correction will be described. Fig. 7 is a flowchart illustrating an example of a workpiece height correction procedure. The workpiece height correction is performed by subsequently executing advance preparation for camera adjustment (step S100), advance preparation for camera installation (step S110), and workpiece height correction during production (step S120).

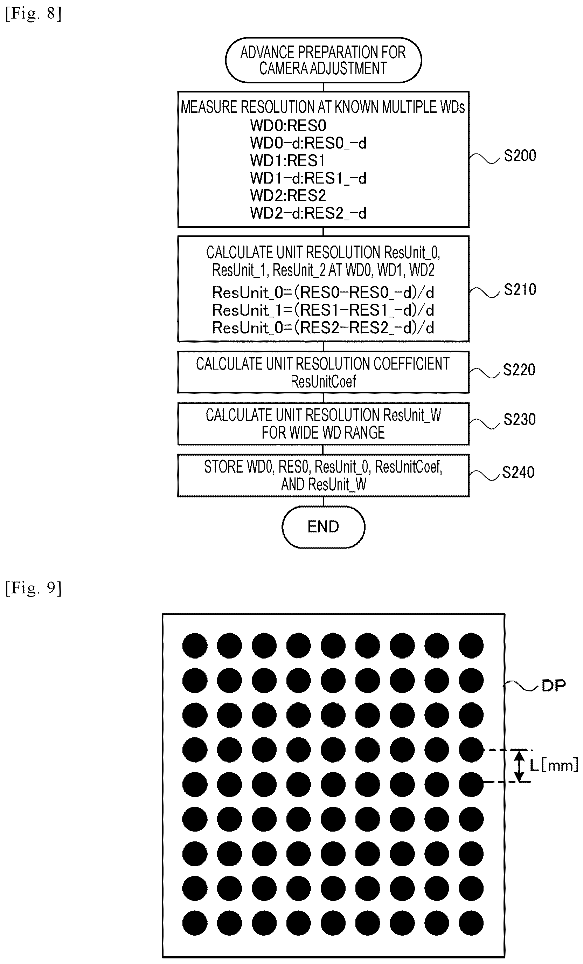

Fig. 8 is a flowchart illustrating an example of advance preparation for camera adjustment. The advance preparation for camera adjustment is performed by image processing section 42 before robot system 10 is shipped to the customer.

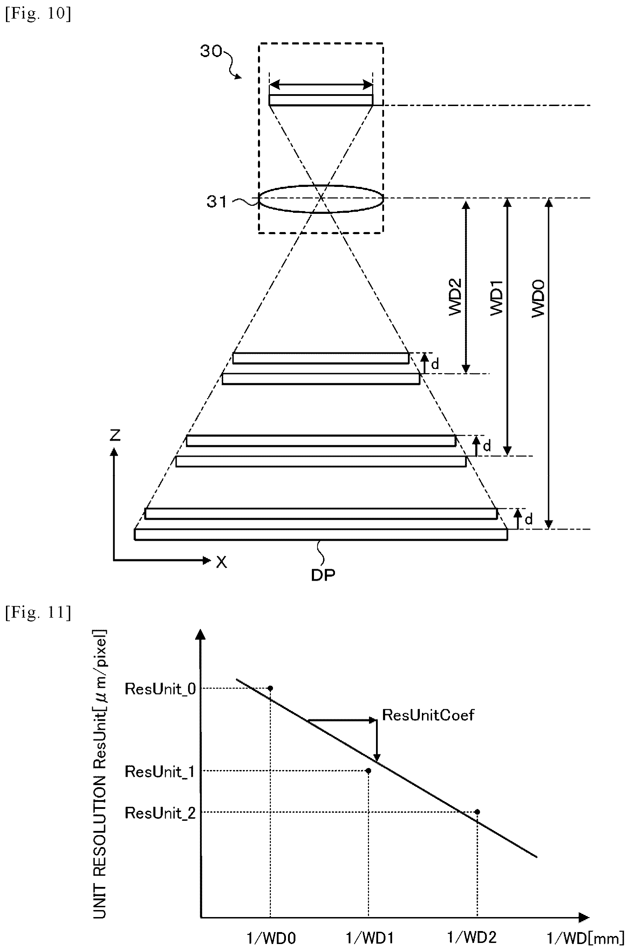

In the advance preparation for camera adjustment, image processing section 42 first acquires each of measurement values of resolutions RESO, RES1, RES2, RES0_d, RES 1_d, and RES2_d at multiple known working distances WD0, WD1, and WD2 including reference working distance WD0 and multiple working distances WD0-d, WD1-d, and WD2-d having heights different from working distances WD0, WD1, and WD2 by predetermined height d (step S200). Each of known multiple working distances WD0, WD1, and WD2 requires focus adjustment, and predetermined height d is a height within the range of the depth of field with respect to working distances WD0, WD1, and WD2. Here, the resolution is measured as follows. First, for example, as illustrated in Fig. 10, jig plate DP (refer to Fig. 9) in which circular dots are arranged in a matrix at known intervals L is installed. Next, as illustrated in Fig. 10, jig plate DP is captured with two-dimensional camera 30 at each of working distances WD0, WD1, WD2, WD0-d, WD1-d, and WD2-d as the distance between lens 31 of two-dimensional camera 30 and jig plate DP. The measurement values of resolutions RESO, RES1, RES2, RES0_d, RES1_d, and RES2_d are calculated by recognizing the dot from each of the obtained captured images, counting the number of pixels between the dots, and dividing known interval L between the dots by the number of pixels between the dots.

Next, image processing section 42 calculates unit resolutions ResUnit_0, ResUnit_1, and ResUnit_2 at working distances WD0, WD1, and WD2 by the following Equations (4), (5), and (6) (step S210).

$$ResUnit\_0 = (RES0 - RES0\_d)/d \ ... \ (4)$$

$$ResUnit\_1 = (RES1 - RES1\_d)/d \ ... \ (5)$$

$$ResUnit\_2 = (RES2 - RES2\_d)/d \ ... \ (6)$$

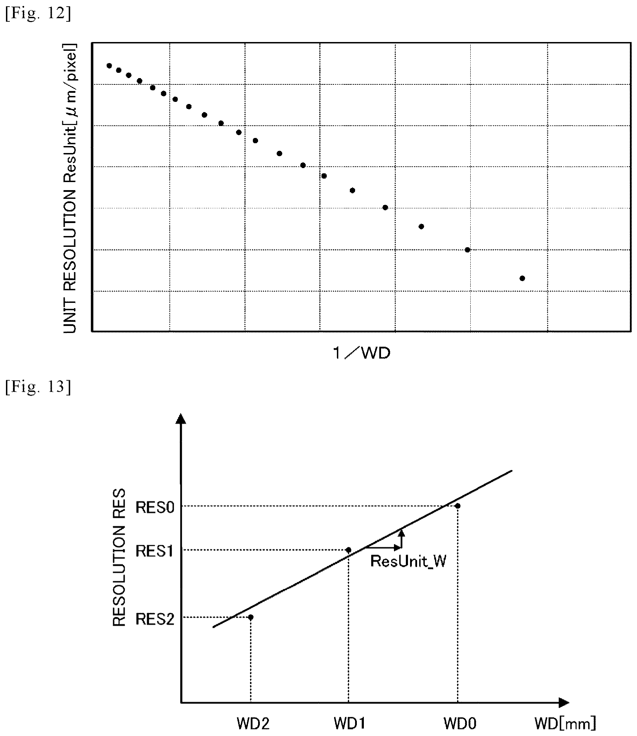

Next, image processing section 42 calculates unit resolution coefficient ResUnitCoef (first relationship), that is a relationship between the unit resolution and the working distance, by regression analysis based on unit resolutions ResUnit_0, ResUnit_1, and ResUnit_2 at working distances WD0, WD1, and WD2 calculated in step S210 (step S220). Here, as illustrated in Fig. 11, when unit resolution ResUnit is a linear function with respect to the reciprocal (1/WD) of working distance WD, unit resolution coefficient ResUnitCoef can be represented as a slope of the linear function. Specifically, unit resolution coefficient ResUnitCoef is calculated by calculating the slope of the regression line by the least squares method based on reciprocal 1/WD 0, 1/WD 1, and 1/WD2 of working distances WD0, WD1, and WD2 and unit resolutions ResUnit_0, ResUnit_1, and ResUnit_2. This is based on the discovery by the inventors of the present application that, in a case where workpiece height h is changed after the installation height of two-dimensional camera 30 is changed with the focus adjustment, unit resolution ResUnit has a relationship of changing in a linear function manner with respect to the reciprocal (1/WD) of working distance WD as illustrated in Fig. 12.

Image processing section 42 calculates unit resolution ResUnit_W for the wide WD range (second relationship) that is a relationship between the amount of change in the working distance and the amount of change in the resolution by regression analysis based on resolutions RESO, RES1, and RES2 at known working distances WD0, WD1, and WD2 acquired in step S200 (step S230). Here, as illustrated in Fig. 13, when resolution RES is a linear function with respect to working distance WD, unit resolution ResUnit_W for the wide WD range can be represented as a slope of the linear function. This is based on the fact that the ratio of the variation amount of resolution RES to the variation amount of working distance WD is constant in a case where working distance WD is varied with the focus adjustment as illustrated in Fig. 5B described above. Specifically, the calculation of unit resolution ResUnit_W for the wide WD range is performed by calculating the slope of the regression line by the least squares method based on working distances WD0, WD1, and WD2 and resolutions RESO, RES1, and RES2. In the present embodiment, in the calculation of unit resolution ResUnit_W for the wide WD range, the regression analysis is performed at three working distances WD0, WD1, and WD2, but the regression analysis may be performed by measurement values at more different working distances WD or multiple measurement values at the same working distance WD. In this manner, the accuracy of the regression analysis can be expected to be improved.

When unit resolution ResUnit_0, unit resolution coefficient ResUnitCoef, and unit resolution ResUnit_W for the wide WD range at reference working distance WD0 are calculated in this manner, image processing section 42 stores reference working distance WD0, resolution RESO, unit resolution ResUnit_0, unit resolution coefficient ResUnitCoef, and unit resolution ResUnit_W for the wide WD range in storage section 43 (step S240), and ends the advance preparation for camera adjustment.

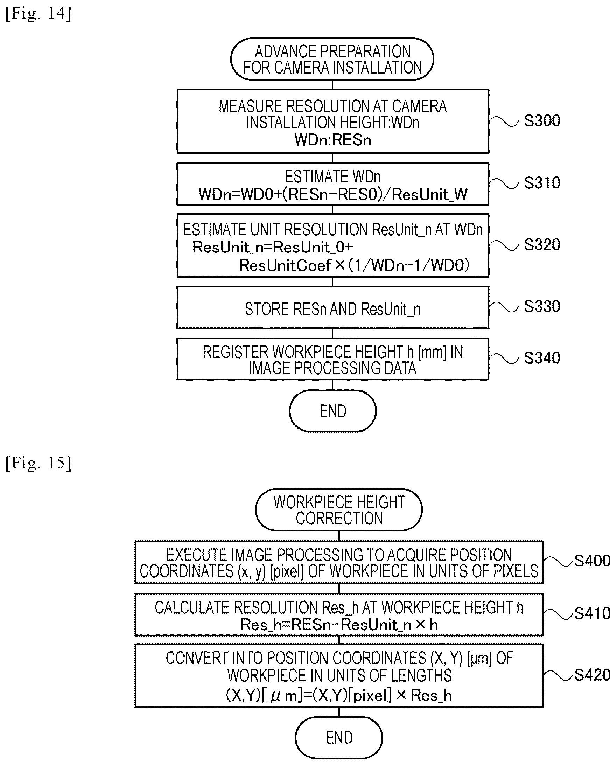

Next, advance preparation for camera installation will be described. Fig. 14 is a flowchart illustrating an example of advance preparation for camera installation. The advance preparation for camera installation is executed by image processing section 42 for installation of two-dimensional camera 30 at a shipping destination (production facility) after robot system 10 is shipped to a customer.

In the advance preparation for camera installation, image processing section 42 first acquires the measurement value of resolution RESn at the installation height (unknown working distance WDn) of two-dimensional camera 30 with respect to loading surface S of workpiece W (step S300). A method of measuring the resolution is described above. Next, working distance WDn for measuring resolution RESn is estimated by following Equation (7) based on acquired resolution RESn and reference working distance WD0, resolution RESO, and unit resolution ResUnit_W for the wide WD range stored in storage section 43 in advance preparation for camera adjustment (step S310). When working distance WDn is confirmed in advance, step S310 may be omitted. In addition, when working distance WDn can be measured, the measurement value may be used.

$$WDn = WD0 + (RESn - RES0)/ResUnit\_W \ ... \ (7)$$

Next, image processing section 42 estimates unit resolution ResUnit_n at working distance WDn by following Equation (8) based on estimated working distance WDn and reference working distance WD0, unit resolution ResUnit_0, and unit resolution coefficient ResUnitCoef stored in storage section 43 in advance preparation for camera adjustment (step S320).

$$ResUnit\_n = ResUnit\_0 + ResUnitCoef \times (1/WDn - 1/WD0) ... (8)$$

When unit resolution ResUnit_n at working distance WDn is estimated in this manner, image processing section 42 stores resolution RESn and unit resolution ResUnit_n at working distance WDn in storage section 43 (step S330), registers workpiece height h in the image processing data (step S340), and ends the advance preparation for camera installation.

Next, the workpiece height correction will be described. Fig. 15 is a flowchart illustrating an example of workpiece height correction. The workpiece height correction is executed by image processing section 42 during production.

In the workpiece height correction, image processing section 42 first processes an image of workpiece W captured with two-dimensional camera 30 during production to acquire position coordinates (X, Y) [pixel] of workpiece W in units of pixels (step S400). Next, image processing section 42 acquires workpiece height h, and calculates resolution Res_h at workpiece height h (a position higher than loading surface S by workpiece height h) by following Equation (9) based on resolution RESn and unit resolution ResUnit_n at working distance WDn stored in storage section 43 in advance preparation for camera installation (step S410). Image processing section 42 converts the position coordinates (X, Y) [pixel] of workpiece W in units of pixels into the position coordinates (X, Y) [μm] of workpiece W in units of lengths by above-described Equation (1) based on calculated resolution Res_h (step S420), and ends the workpiece height correction. Accordingly, even in a case where working distance WDn during production is significantly changed with respect to reference working distance WD0 by changing workpiece height h or the like after the installation height of two-dimensional camera 30 is changed with focus adjustment, the position of workpiece W can be accurately recognized. Therefore, by controlling robot 20 based on the recognized position of workpiece W, the work accuracy of robot 20 with respect to workpiece W can be further improved.

$$Res\_h = RESn - ResUnit\_n \times h ... (9)$$

In the present embodiment, robot 20 includes five-axis vertical articulated arm 22. However, the arm is not limited to five axes, and may have six or more axes, for example. In addition, the robot may include a horizontal articulated arm.

As described above, an image obtained by capturing an image of a workpiece placed on a loading surface from a predetermined height with a two-dimensional camera is processed, a position of the workpiece is recognized as a coordinate value in units of pixels, and the coordinate value in units of pixels is converted into a coordinate value in units of lengths using a resolution representing a length per unit pixel of the image. As a result of intensive studies, the inventors of the present application found that there is a certain relationship between the unit resolution and the working distance (a relationship in which the unit resolution changes in a linear function manner with respect to the reciprocal of the working distance) in a case where the workpiece height, the installation height of the camera, or the like varies and the working distance is relatively significantly changed. Therefore, by acquiring the relationship (first relationship) between the unit resolution and the working distance in advance, it is possible to measure the resolution at the height at which the two-dimensional camera is installed, estimate the working distance for measurement, estimate the unit resolution from the estimated working distance, and accurately correct the resolution of the image according to the height of the workpiece. As a result, in the image processing method of the present disclosure, even in a case where the workpiece height, the installation height of the camera, or the like varies, the position in the horizontal direction of the upper end surface of the workpiece can be accurately recognized using the two-dimensional camera.

In addition, in the image processing method of the present disclosure, the two-dimensional camera may be a camera configured to perform focus adjustment for focusing according to the working distance, and the first to third steps may be executed in a case where the installation height of the two-dimensional camera is changed with the focus adjustment. In a case where the workpiece height is changed after the installation height of the two-dimensional camera is changed, since the variation amount (unit resolution) of the resolution with respect to the variation amount of the workpiece height is not constant before and after the change of the installation height, the resolution of the image can be accurately corrected by applying the first to third steps.

Furthermore, in the image processing method of the present disclosure, in the first step, the resolution of the image of the two-dimensional camera may be measured at multiple working distances determined in advance and multiple other working distances each having a height different from the multiple working distances by a predetermined value, a unit resolution at the multiple working distances may be calculated by dividing the amount of change in resolution between each measured working distance and the corresponding other working distance by the predetermined value, and the first relationship may be derived based on the calculated unit resolution at the multiple working distances. In this manner, the first relationship can be derived by a simpler procedure.

In this case, the first step may derive a second relationship that is a relationship between the amount of change in the working distance and the amount of change in the resolution based on the resolutions measured at each of the multiple working distances, and the second step may measure the resolution of the image of the two-dimensional camera at any working distance and estimate the working distance for measurement based on the measured resolution and the second relationship. In this manner, the unknown working distance can be accurately estimated, and the first relationship can be derived based on the estimated working distance.

The present disclosure is not limited to the form of the image processing method, and may be a form of a robot system.

It goes without saying that the present invention is not limited to the above-described embodiment and can be implemented in various aspects without departing from the technical scope of the invention of the present disclosure.

Industrial Applicability

The present disclosure can be used in the manufacturing industry of robot systems and image processing devices.

Reference Signs List

10: Robot system, 12: Workpiece supply device, 20: Robot, 22: Arm, 24: Motor, 26: Encoder, 30: Two-dimensional camera, 31: Lens, 40: Robot control device, 41: Robot control section, 42: Image processing section, 43: Storage section, DP: Jig plate, M: Fixing member, S: Loading surface.

**Claims**

1. An image processing method for processing an image obtained by capturing an image of a workpiece placed on a loading surface from a predetermined height with a two-dimensional camera to recognize a position of the workpiece as a coordinate value in units of pixels, and converting the coordinate value in units of pixels into a coordinate value in units of lengths using a resolution serving as an amount of change in length per unit pixel of the image, the method comprising:

    a first step of acquiring a first relationship that is a relationship between a unit resolution serving as an amount of change in resolution per unit height and a working distance serving as a distance between a target object and a lens of the two-dimensional camera;
    a second step of measuring a resolution of the image of the two-dimensional camera with respect to the loading surface of the workpiece at an installation height of the two-dimensional camera when the two-dimensional camera is installed to estimate a working distance for measurement, and estimating the unit resolution based on the estimated working distance and the first relationship; and
    a third step of acquiring a height of the workpiece and correcting the resolution of the image based on the acquired height of the workpiece and the estimated unit resolution.

2. The image processing method according to claim 1, wherein

    the two-dimensional camera is a camera configured to perform focus adjustment for focusing according to the working distance, and
    the first to third steps are executed in a case where the installation height of the two-dimensional camera is changed with the focus adjustment.

3. The image processing method according to claim 1 or 2, wherein
    in the first step, the resolution of the image of the two-dimensional camera is measured at multiple working distances determined in advance and multiple other working distances each having a height different from the multiple working distances by a predetermined value, a unit resolution at the multiple working distances is calculated by dividing an amount of change in resolution between each measured working distance and the corresponding other working distance by the predetermined value, and the first relationship is derived based on the calculated unit resolution at the multiple working distances.

4. The image processing method according to claim 3, wherein

in the first step, a second relationship that is a relationship between an amount of change in the working distance and an amount of change in the resolution is derived based on the resolution measured at each of the multiple working distances, and

in the second step, the resolution of the image of the two-dimensional camera at any working distance is measured and the working distance for measurement is estimated based on the measured resolution and the second relationship.

5. A robot system comprising a working robot configured to perform work on a workpiece placed on a loading surface and a two-dimensional camera configured to capture an image of the workpiece placed on the loading surface from a predetermined height, the robot system comprising:

an image processing section configured to process the image captured with the two-dimensional camera to recognize a position of the workpiece as a coordinate value in units of pixels, and convert the coordinate value in units of pixels into a coordinate value in units of lengths using a resolution serving as an amount of change in length per unit pixel of the image;

a storage section configured to store a first relationship that is a relationship between a unit resolution serving as an amount of change in resolution per unit height and a working distance serving as a distance between a target object and a lens of the two-dimensional camera;

an estimation section configured to measure a resolution of the image of the two-dimensional camera with respect to the loading surface of the workpiece at a height at which the two-dimensional camera is installed to estimate a working distance for measurement, and estimate a unit resolution based on the estimated working distance and the first relationship; and

a correction section configured to acquire a height of the workpiece and correct the resolution of the image based on the acquired height of the workpiece and the estimated unit resolution.

[Fig. 1]

[Fig. 2A]

[Fig. 2B]

[Fig. 3]

[Fig. 4]

[Fig. 5A]

[Fig. 5B]

[Fig. 6A]

[Fig. 6B]

[Fig. 6C]

[Fig. 7]

[Fig. 8]

```
      ┌─────────────────────────────┐
      │  ADVANCE PREPARATION FOR    │
      │     CAMERA ADJUSTMENT        │
      └─────────────────────────────┘
                    │
      ┌─────────────────────────────┐
      │ MEASURE RESOLUTION AT KNOWN MULTIPLE WDs │
      │         WD0:RES0             │
      │         WD0-d:RES0_-d        │          ∽ S200
      │         WD1:RES1             │
      │         WD1-d:RES1_-d        │
      │         WD2:RES2             │
      │         WD2-d:RES2_-d        │
      └─────────────────────────────┘
```

MEASURE RESOLUTION AT KNOWN MULTIPLE WDs
WD0:RES0
WD0-d:RES0_-d
WD1:RES1
WD1-d:RES1_-d
WD2:RES2
WD2-d:RES2_-d
∽ S200

CALCULATE UNIT RESOLUTION ResUnit_0,
ResUnit_1, ResUnit_2 AT WD0, WD1, WD2
$ResUnit\_0 = (RES0 - RES0\_-d)/d$
$ResUnit\_1 = (RES1 - RES1\_-d)/d$
$ResUnit\_0 = (RES2 - RES2\_-d)/d$
∽ S210

CALCULATE UNIT RESOLUTION COEFFICIENT
ResUnitCoef
∽ S220

CALCULATE UNIT RESOLUTION ResUnit_W
FOR WIDE WD RANGE
∽ S230

STORE WD0, RES0, ResUnit_0, ResUnitCoef,
AND ResUnit_W
∽ S240

END

[Fig. 9]

DP

L [mm]

[Fig. 10]

[Fig. 11]

[Fig. 12]

[Fig. 13]

[Fig. 14]

ADVANCE PREPARATION
FOR CAMERA INSTALLATION

MEASURE RESOLUTION AT CAMERA
INSTALLATION HEIGHT:WDn
WDn:RESn     ∿ S300

ESTIMATE WDn
$WDn=WD0+(RESn-RES0)/ResUnit\_W$     ∿ S310

ESTIMATE UNIT RESOLUTION ResUnit_n AT WDn
$ResUnit\_n=ResUnit\_0+$
$ResUnitCoef \times (1/WDn-1/WD0)$     ∿ S320

STORE RESn AND ResUnit_n     ∿ S330

REGISTER WORKPIECE HEIGHT h [mm] IN
IMAGE PROCESSING DATA     ∿ S340

END

[Fig. 15]

WORKPIECE HEIGHT
CORRECTION

EXECUTE IMAGE PROCESSING TO ACQUIRE POSITION
COORDINATES (x, y) [pixel] OF WORKPIECE IN UNITS OF PIXELS     ∿ S400

CALCULATE RESOLUTION Res_h AT WORKPIECE HEIGHT h
$Res\_h=RESn-ResUnit\_n \times h$     ∿ S410

CONVERT INTO POSITION COORDINATES (X, Y) [μm] OF
WORKPIECE IN UNITS OF LENGTHS
$(X,Y)[\mu m]=(X,Y)[pixel] \times Res\_h$     ∿ S420

END

**EP 4 691 706 A1**

## INTERNATIONAL SEARCH REPORT

| International application No. |
| --- |
| **PCT/JP2023/014260** |

| A. | CLASSIFICATION OF SUBJECT MATTER |
| --- | --- |

*B25J 13/08*(2006.01)n; *B25J 19/04*(2006.01)i; *G06T 7/70*(2017.01)i
FI:   G06T7/70 A; B25J19/04; B25J13/08 A

According to International Patent Classification (IPC) or to both national classification and IPC

| B. | FIELDS SEARCHED |
| --- | --- |

Minimum documentation searched (classification system followed by classification symbols)

B25J13/08; B25J19/04; G06T7/70

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2020/121399 A1 (FUJI CORPORATION) 18 June 2020 (2020-06-18) claims 1-6 | 1-5 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **30 May 2023** | **13 June 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/014260**

| Patent document cited in search report | | | Publication date (day/month/year) | Patent family member(s) | | | Publication date (day/month/year) |
|---|---|---|---|---|---|---|---|
| WO | 2020/121399 | A1 | 18 June 2020 | EP | 3895855 | A1 | |
| | | | | claims 1-6 | | | |
| | | | | CN | 113015604 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020121399 A